# EUROPEAN PATENT SPECIFICATION

(11) **EP 2 716 955 B1**
(45) Date of publication and mention of the grant of the patent: **27.12.2017**
(21) Application number: 13187659.1
(22) Date of filing: 06.03.2009
(51) Int. Cl.: F16L 55/132, F16L 55/10, F16L 55/105, F16L 55/124

(54) **Plugging machine for interventions of installation, repair, maintenance on pressure fluids supply piping**
Maschine zun Verschliessen von Versorgungsrohren für Druckflüssigkeiten bei der Installation, Reparatur oder Wartung
Machine d'obturation pour des interventions d'installation, réparation et maintenance de canalisations d'alimentation en fluides sous pression

(43) Date of publication of application: 09.04.2014
(62) Divisional of application: 09425089.1
(73) Proprietor: I.S.I.F. S.R.L., 52020 Castelfranco di Sopra (AR) (IT)
(72) Inventor: Odori, Mauro, 52020 Casatelfranco di Sopra (AR) (IT)
(74) Representative: Ruzzu, Giammario

(56) References cited:
- WO-A1-2005/022012
- DE-A1- 3 729 311
- FR-A1- 2 638 275
- US-A- 386 446
- US-A- 1 181 984
- US-A- 3 774 646
- US-A- 4 381 800
- US-A- 4 493 344
- US-A1- 2004 168 734

## Description

Any intervention on pressure fluids supply piping in service that needs steel piping to be cut and then jointed by welding obliges the operators to stop the gas flow upstream and downstream of the intervention area by means of proper plugging machines, which are available on the market. In order to keep the service on, a by-pass pipe is assembled, which connects the machines.

The plugging machines are assembled on the pipe on which the intervention is carried out, by means of proper shaped fittings and valves (with great dimensional ranges), that are welded to the pipe.

The plugging machines available on the market are conceived according to possible operating modes:
according to a first mode, a plug consists of a steel body coated with rubber and held by a heavy steel frame. The plug is inserted inside the pipe, through the fitting and the valve, in such a way that the pressure of the fluid cannot displace the plug, while the same pressure of the fluid presses the rubber against the inner surface of the pipe, thus making the seal;
according to a second mode, the plug is composed of two steel disks and a rubber gasket inserted between them. The plug is inserted inside the pipe by means of a steel rod and a taper gear system is then operated, through the rod, so that the disks are brought near to each other. This makes them press the gasket between them, which expands the gasket and pushes it against the inner surface of the pipe, thus making the seal.

Both these solutions have advantages. In the first, the heavy steel structure avoids the plug to be displaced, while in the second the seal on the inner surface of the pipe is more efficient.

But these solutions have also drawbacks. In the first solution, a direct control of the seal is not possible, as it is obtained by means of the fluid pressure. In the second solution, the plug is inserted and held by a steel rod, which can be unfit with high pressures and can bring about dangerous consequences in case of damage of the operating gears. Moreover, with high pressured fluids, the rubber gasket can be "extruded", that is it can be extracted from the disks by the pressure.

The publication US2008/0017390 discloses an isolation tool for use in a pipe, which comprises a seal unit, the seal unit being mounted to a launching assembly. The seal unit is adapted for location in a section of pipe, via a single opening in the pipe wall. The seal unit comprises seal elements designed for engaging the pipe inner wall to isolate a section of pipe. The seal elements are initially retained in a retracted configuration. Hydraulic pressure is applied to a cylinder so that a piston located in the cylinder is translated into the seal unit, causing compression of the seal elements, which contacts the inner wall of the pipe.

The EP-A-1 314 926 discloses a method of sealing a pipe (4) and a device for sealing the pipe, which prevents gas leakage out of a pipe stub (20) plugged by a stopper (14) disposed in a tee fitting (10), to allow a permanent cap (22) to be welded onto the pipe (4). The device comprises an expandable plug (30) with a pair of plates (32,34) and a sealing member (36) disposed between the plates. The plates (32,34) can be squeezed together, for example by tightening nuts (42) onto bolts (40) extending through the plates to compress the sealing member (36) and cause the periphery of the sealing member to expand against the inner wall of the pipe (4). Stabilizing means, for example a nut (46) having a reverse thread and a complimentary tool (50), is provided for stabilizing the expandable plug (30) radially within the pipe (4) as the plates (32,34) are squeezed together. The expandable plug (30) is inserted into the pipe stub (20) after the bypassed section of pipe (4) has been removed, and lodged in the pipe by squeezing the plates (32,34) together to expand the sealing member (36) against the inner wall of the pipe stub (20). A vent hole (54) is provided for venting of heated air from the portion of the pipe stub (20) between the expandable plug (30) and the open end of the pipe stub (20). The cap (22) is then welded onto the pipe stub (20).

DE 37 29 311 A1 to MANIBS SPEZIALARMATUREN discloses a device for shutting off gas lines, having an inflatable hose which is inserted in the gas line by means of an angled-off guide part which passes through the inflatable hose. The angled-off part is provided with rounded means fit to prevent any lateral displacement of the same angled-off part during the shutoff intervention.

US 386,446 to Daniel B. Railey and Norman McGillivary discloses an apparatus for detecting leaks in soil and other pipes, showing a couple of valves for closing two branches of a T-pipe in order to allow a possible leak to be detected. A filling tube is provided, mounted through one of the valves, to allow water to be admitted to a pipe branch during the leak detecting operation.

US 1,181,984 to Arni John W. discloses a device for closing a pipe through a T-fitting, provided with an inflatable plug. An inflatable uppermost plug member is also provided to seal the mouth of the T-fitting.

WO 2005/022012 to Caledyne Limited discloses an annular sealing element to seal between metal surfaces for use in flanges, joints and the like. The sealing element is provided with inner and outer metal deformable surfaces joined at ends. However, said sealing element is not suitable for sealing gas pipes during a repair intervention.

### PLUGGING MACHINE

The plugging machine is composed of the following parts.

A main frame 13 consisting of a steel cylindrical casing 16 with a flange 24 in the lower side to be assembled on the fitting/valve 2. On the lateral surface of the casing 16 there are fittings or flanges 23 for the by-pass and the ventilation valve. On the upper part of the casing there is an exit (provided with a proper sealing gasket) for the steel rod 4 for the insertion of the plug 1 inside the pipe 18 on which the intervention is carried out.

The rod 4 is operated by a hydraulic piston 3 mounted on four columns 20 over the top of the casing 16. The end of the piston has a hole for the movability of the machine.

A heavy round steel structure 21, having its lateral surface coated with a low-friction material, is mounted to the lower end of the insertion rod and has the task of avoiding displacement of the plug, when inserted in the fitting/valve 2 set in communication with the hole made in the pipe during the operations. The round steel structure goes to contact the lateral inner wall of the fitting/valve 2 and keeps steady the whole device when the plug is inside the pipe 18.

In fact, the round structure could be made of any suitable material other than steel and not completely circular, and may have instead the shape of opposing sectors or lobes.

In the upper and lower surfaces of the round structure there are holes for the fluid coming from the pipe 18 to enter the casing 16 and then the by-pass. Also, a hinge 17 is fastened to the lower surface of the round structure and to the body of the plug 1.

As the body of the plug 1 is attached to the round structure by a hinge 17, it can be rotated for the insertion in the pipe 18 on which the intervention is made.

The plug 1 is composed of a hard steel body 25 inside with a piston 5 built therein for the oleodynamic operation of the plug 1. The piston 5 acts on two steel taper disks 6, 7 to bring them near each other (only the external disks 6 is moved) causing the compression, in radial direction, of a rubber, annular gasket 8.

By operating the piston 5, the gasket 8 will in this way be pressed against the inner surface 28 of the pipe making the seal of the plug 1.

Between the movable taper disk 6 and the gasket 8 there are some properly shaped steel plates 10, which, while the plug is operated, follow the expansion of the gasket 8, to which they are attached, sliding in radial direction along guides made on the corresponding taper disk 6.

The function of the steel plates 10 is to avoid that the gasket 8 is "extruded", that is extracted from its place due to the fluid pressure.

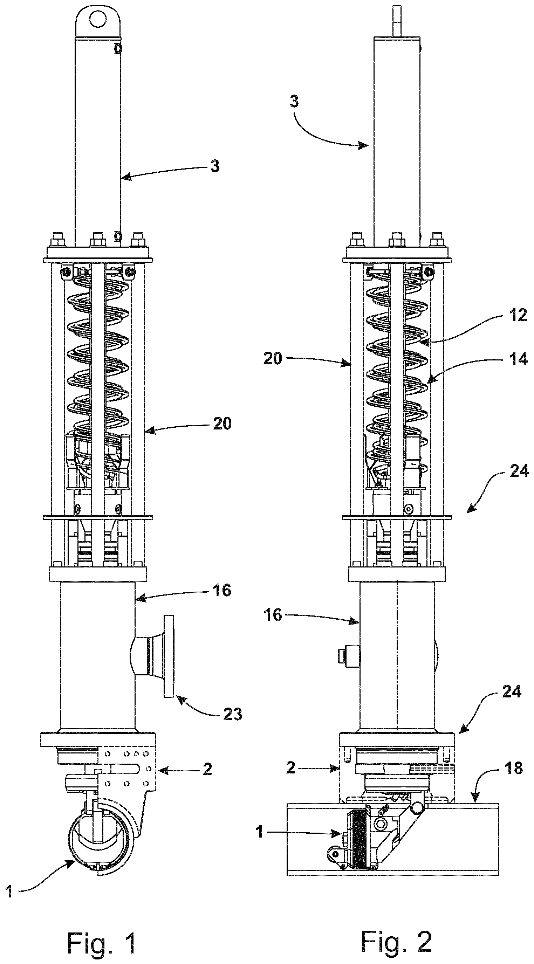

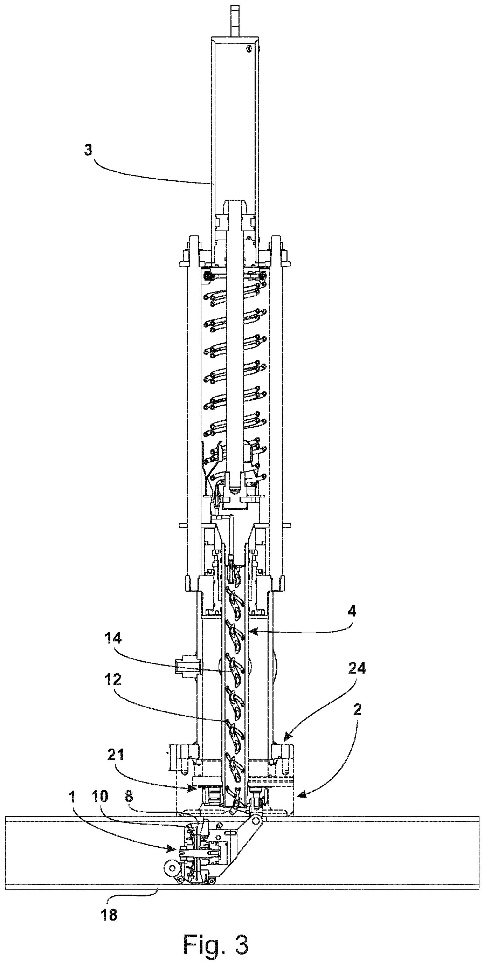

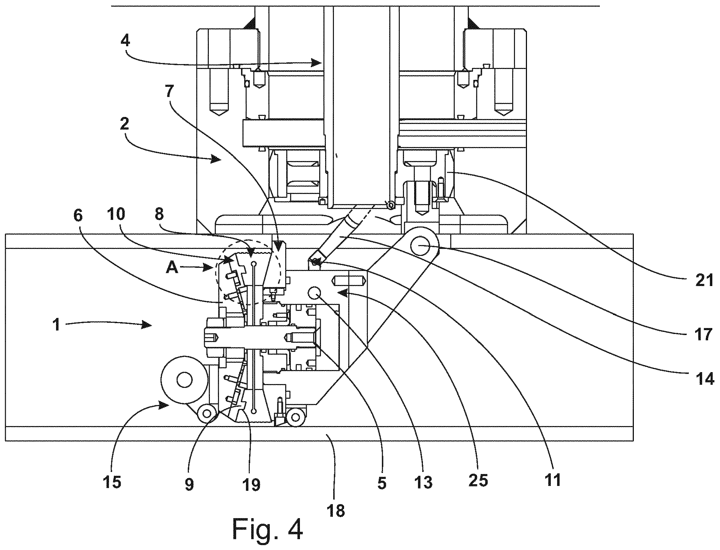

In detail, the plates 10 are linked to the movable steel plates by means of respective teeth 9 made on the side of them facing the gasket 8 (see Fig. 4). The tooth 9 of each plate 10 is introduced into a circular recess 19 made in the annular gasket 8 (see again Fig. 4).

When the movable disk 6 is moved towards the fixed disk 7 and the gasket 8 extends outwardly, the teeth 9 engaged with the recess 19 make the plates 10 slide on the tapered surface of the movable disk 6 in a translation movement towards the inner pipe wall 28, so that when the rubber annular gasket 8 is totally expanded inside the pipe and its outer diameter is quite external to the disks 6 and 7, the radiant
crown of steel plates 10 have been moved along with the gasket.

Therefore, the plates form a barrier on the side surface of the rubber gasket 8 that avoids the rubber gasket 8 to be extruded, i.e. extracted from between the disks 6, 7 by the pressure of the fluid acting on the other side surface.

The teeth 9 of the plates 10 are slightly bent towards the end of the respective plates turned towards the center of the movable disk 6, when the gasket 8 is mounted, and the circular recess 19 of the gasket 8 has a shape complementary to the shape of the teeth 9. This makes the gasket 8 have a better grip on the teeth 10 of the plates, and ensures that the plates 10 are correctly displaced by the gasket 8 while expanding.

When the plug 1 is released, i.e. the movable taper disk 6 is brought away from the fixed one under the push of the hydraulic piston, which is moved back, the rubber gasket 8 comes back to its unloaded dimensions and the steel plates 10 return in their original positions.

Ducts 14 are made in the body of the plug 1 for inlet and outlet of the oil for the piston operation. The oil circuit is equipped with a safety valve 13, also made in the body of the plug 1, which avoids accidental opening or closing of the plug in case of any failure.

In case the pipe 18 conveys flammable or explosive fluids, nitrogen is used to prevent formation of an explosive atmosphere. The duct 12 for nitrogen injection directly in the pipe is also made in the plug 1, with no need to weld any special fitting therefor.

The movable taper disk 6 carries wheels 15 aimed at making easier the positioning of the plug 1 inside the pipe 18. In the fixed disk there is made an edge which goes in contact with the lower part of the pipe 18 and a ledge is made in the upper part of the disk 7, which goes in contact with the wall of the hole drilled on the pipe. The edge and the ledge give the maximum stability to the plug 1 under the pressure of the fluid.

### OPERATION

After welding the fittings 2, one upstream and one downstream of the intervention area, and after drilling the pipe 18 in the area below the fittings with the drilling machine, the plugging machines are mounted to the fittings. By operating the external pistons 3 of the plugging machines, the plugs 1 are rotated about the hinge 17 and inserted in the pipe 18.

When the plugs 1 are positioned, the inner pistons 5 of the plugs 1 are operated so that the rubber gasket 8 is pressed against the inner surface 28 of the pipe 18, thus making the seal 8 expand. Radial expansion of the rubber causes a simultaneous radial movement of the anti-extrusion steel plates 10.

Now the pipe 18 carrying the fluid is plugged on both sides of the intervention area and it is possible to vent the fluid between the plugs 1, through proper ventilation pipes. Then the intervention can start.

When the work is over, the inner piston 5 of each plug is operated to move back, releasing the gasket 8 and de-activating the plug 1. Then the plug is extracted from the pipe 18 by operating the external hydraulic piston 3, which makes the plug 1 rotate back about the hinge 17.

The plugging machine can now be removed.

## Claims

1. A plugging machine for plugging pipes (18) for transportation of fluid under pressure, including a steel frame (16, 20), and a directly operated sealing system, the frame including a cylindrical steel casing (16), provided with a flange (24) at its lower side to be fastened on a fitting/valve (2) joined to said pipe (18), the directly operated sealing system including a plug (1) composed of two steel disks (6, 7) with a rubber gasket (8) inserted between them, in use one of said disk (7) being kept stationary and the other disk (6) being moved, so that the disks (6, 7) are brought near to each other and the gasket (8) expanded against the inner surface (28) of the pipe (18), thus making a seal; a hollow rod (4) being provided, passing through said cylindrical steel casing (16);
a round structure (21) being associated to the lower end of said cylindrical steel casing (16) and fastened in use to said rod (4) and inserted into the fitting/valve (2) with the task of avoiding displacement of the plug (1) when this latter is inserted in the pipe (18) during the operations;
said plugging machine being
**characterized in that** in the upper and lower surfaces of the said round structure (21) there are provided holes for fluid coming from the pipe (18) to enter the casing (16), wherein the lateral surface of the casing (16) is provided with fittings or flanges (23) for the by-pass and the ventilation valve.

2. A machine as claimed in claim 1, wherein said round structure (21) is made of steel and its lateral surface, going in contact with the lateral inner wall of the fitting/valve (2), is coated with a low-friction material.

3. A machine as claimed J in claim 1 or 2, wherein said round structure (21) has a shape other than circular or completely circular, and may have instead the shape of opposing sectors or lobes.

4. A machine as claimed in any of claims 1 to 3, wherein on the tapered surface of the movable disk (6) there is a series of movable steel plates (10) which, while the plug (1) is operated, follow the expansion of the gasket (8), to which they are attached, sliding in radial direction along guides made on the corresponding taper disk (6) and acting so as to avoid that the gasket (8) is extracted from its place due to the fluid pressure.

5. A machine as claimed in claim 4, wherein said plates (10) feature each one a tooth (9) on the side facing said gasket (8), and said gasket (8) has a concentric circular recess (19) made on the side facing said plates (10), with said teeth (9) being introduced into said concentric circular recess so as to link the plates (10) to said gasket (8).

6. A machine as claimed in claim 5, wherein said teeth (9) of said plates (10) are bent towards the end of the respective plates turned towards the center of the movable disk (6) when the gasket (8) is mounted, and the circular recess (19) of said gasket (8) has a shape complementary to the shape of the teeth (9).

7. A machine as claimed in any of claims 1 to 6, wherein said plug (1) is connected to said frame by means of a hinge (17), and said hollow rod (4) linked to the plug (1) and passes through said cylindrical steel casing (16), so that, when said rod (4) is moved up and down said plug (1) rotates about the hinge (17) and is inserted into or removed from said pipe (18) on which the intervention is carried out, respectively.

8. A machine as claimed in any of claims 1 to 7, wherein a hydraulic cylinder (3) is provided on top of said frame and acts on said rod (4), for insertion or removal of said plug (1) into and from said pipe (18).

9. A machine as claimed in any of claims 1 to 8, said plug features a second hydraulic cylinder (5) for moving the movable steel tapered disk (6) nearer to the stationary disk (7) so making the rubber gasket (8) between them expand radially to engage the inner pipe wall (28).

10. A machine as claimed in any of claims 1 to 9 including safety valves (13) also made in the body (25) of the plug (1), which avoids accidental opening or closing of the plug in case of any failure.

11. A machine as claimed in one of claims 1 to 10, wherein nitrogen is injected inside the intervention area of the pipe (18) to avoid formation of flammable or explosive mixtures with air and the fluids being transported.

12. A machine as claimed in claim 11, wherein said plug (1) features a system of internai ducts (11) by means of which nitrogen can be conveyed into the pipe (18), ahead the plug (1) towards the intervention area.

## Patentansprüche

1. Eine Absperrvorrichtung zum Verstopfen von Rohren (18) zum Transport von unter Druck stehendem Fluid, die einen Stahlrahmen (16, 20) und ein direkt betriebenes Dichtungssystem umfasst, wobei der Rahmen ein zylindrisches Stahlgehäuse (16) enthält das an seiner unteren Seite mit einem Flansch (24) versehen ist um es an einem mit dem Rohr (18) verbunden Fitting/Ventil (2) zu befestigen, wobei das direkt betriebenes Dichtungssystem einen aus zwei Stahlscheiben (6, 7) mit einer zwischen ihnen eingefügt Gummidichtung (8) bestehend Stopfen (1) umfasst, wobei im Gebrauch eine der Scheiben (7) stationär gehalten wird während die andere Scheibe (6) so bewegt wird, dass die Scheiben (6, 7) einander angenähert werden und die Dichtung (8) gegen die Innenfläche (28) des Rohrs (18) ausgedehnt wird, so sie ein Versiegelung macht; wobei eine hohle Stange (4) vorgesehen ist, die das zylindrische Stahlgehäuse (16) durchläuft;
und wobei eine runde Struktur (21) dem unteren Ende des zylindrischen Stahlgehäuses (16) zugeordnet ist und im Gebrauch an der Stange (4) befestigt ist und in die Armatur/das Ventil (2) eingeführt wird mit der Aufgabe, eine Verschiebung des Stopfens (1) zu vermeiden, wenn dieser während der Vorgänge in das Rohr (18) eingeführt wird;
wobei die Absperrvorrichtung **dadurch gekennzeichnet** is, dass Löcher sind in der oberen und unteren Oberfläche der runden Struktur (21) vorgesehen für das Fluid, das aus dem Rohr (18) kommt, in das Gehäuse (16) zu eintreten, wobei die Mantelfläche des Gehäuses (16) ist mit Anschlüssen oder Flanschen (23) für den Bypass und das Belüftungsventil versehen.

2. Eine Absperrvorrichtung nach Anspruch 1, wobei die runde Struktur (21) aus Stahl hergestellt ist und ihre seitliche Oberfläche, die in Kontakt mit der seitlichen Innenwand des Fittings/Ventils (2) steht, mit einem reibungsarmen Material beschichtet ist.

3. Eine Absperrvorrichtung nach Anspruch 1 oder 2, wobei die runde Struktur (21) eine andere Form als kreisförmig oder vollständig kreisförmig aufweist und stattdessen die Form von gegenüberliegenden Sektoren oder Lappen haben kann.

4. Eine Absperrvorrichtung nach einem der Ansprüche 1 bis 3, wobei auf der verjüngten Oberfläche der beweglichen Scheibe (6) eine Reihe von beweglichen Stahlplatten (10) vorgesehen ist, die, während der Stopfen (1) betätigt wird, der Ausdehnung von die Dichtung (8), an der sie befestigt sind, folgen und und in radialer Richtung entlang der Führungen, die an der entsprechenden verjüngten Scheibe (6) ausgebildet sind, gleiten, um dass die Dichtung (8) aufgrund des Fluiddrucks aus ihrer Position herausgezogen werden zu verhindert.

5. Eine Absperrvorrichtung nach Anspruch 4, wobei die Platten (10) jeweils einen Zahn (9) an der der Dichtung (8) zugewandten Seite aufweisen und die Dichtung (8) eine konzentrische kreisförmige Ausnehmung (19) aufweist, die an der den genannten Platten (10) zugewandte Seite hergestellt ist, wobei die genannten Zähne (9) in die genannte konzentrische kreisförmige Ausnehmung eingeführt werden, um die Platten (10) mit der genannten Dichtung (8) zu verbinden.

6. Eine Absperrvorrichtung nach Anspruch 5, wobei die Zähne (9) der Platten (10) zu dem Ende der jeweiligen Platten hin gebogen sind, das zur Mitte der beweglichen Scheibe (6) hin gedreht ist, wenn die Dichtung (8) montiert ist, und wobei die kreisförmige Ausnehmung (19) der Dichtung (8) eine Form, die komplementär zu der Form der Zähne (9) ist, hat.

7. Eine Absperrvorrichtung nach einem der Ansprüche 1 bis 6, wobei der Stopfen (1) mit dem Rahmen mittels eines Scharniers (17) verbunden ist und die hohle Stange (4) mit dem Stopfen (1) verbunden ist und durch das zylindrische Stahlgehäuse (16) hindurchgeht, so dass, wenn die Stange (4) wird nach oben und unten bewegt wird, dann der Stopfen (1) um das Gelenk (17) dreht und in das Rohr (18), an dem der Eingriff ausgeführt wird, eingesetzt oder von diesem entfernt wird.

8. Eine Absperrvorrichtung nach einem der Ansprüche 1 bis 7, wobei ein Hydraulikzylinder (3) an der Oberseite des Rahmens vorgesehen ist und auf die Stange (4) einwirkt, um den Stopfen (1) in das Rohr einzuführen oder daraus zu entfernen. (18).

9. Eine Absperrvorrichtung nach einem der Ansprüche 1 bis 8, wobei der Stopfen einen zweiten Hydraulikzylinder (5) aufweist, um die bewegliche verjüngten Stahlscheibe (6) näher an die stationäre Scheibe (7) zu bewegen, so dass die zwischen ihnen entstehen Gummidichtung (8) sich radial ausdehnt, um in die innere Rohrwand (28) einzugreifen.

10. Eine Absperrvorrichtung nach einem der Ansprüche 1 bis 9 mit Sicherheitsventilen (13), die ebenfalls in dem Körper (25) des Stopfens (1) ausgebildet sind, wodurch ein versehentliches Öffnen oder Schließen des Stopfens im Falle eines Versagens vermieden wird.

11. Eine Absperrvorrichtung nach einem der Ansprüche 1 bis 10, wobei Stickstoff in den Interventionsbereich des Rohres (18) injiziert wird, um die Bildung von entflammbaren oder explosiven Gemischen mit Luft und den transportierten Fluiden zu vermeiden.

12. Eine Absperrvorrichtung nach Anspruch 11, wobei der Stopfen (1) ein System von inneren Kanälen (11) aufweist, durch die Stickstoff in das Rohr (18) vor dem Stopfen (1) in Richtung auf den Interventionsbereich gefördert werden kann.

## Revendications

1. Machine d'obturation pour obturer canalisations (18) d'alimentation de fluides sous pression, comprenant un cadre en acier (16, 20), et une système d'étanchéité commande directement, les cadre comportant un boîtier cylindrique en acier (16) muni d'une bride (24) à sa partie inférieure pour être fixé sur un raccord/soupape (2) relié à ladite canalisation (18) le système d'étanchéité commande directement comprenant un bouchon (1) composé de deux disques coniques en acier (6, 7) avec un joint en caoutchouc (8) inséré entre eux, avec l'un desdits disques (7) étant maintenu stationnaire, lorsqu'il est utilisé, et l'autre disque (6) étant déplacé, de sorte que les disques (6, 7) sont placées l'un près de l'autre et le joint d'étanchéité (8) élargi contre la surface intérieure (28) de la canalisation (18), faisant ainsi l'étanchéité;
et une tige creuse (4) étant prévu passant à travers ledit boîtier en acier cylindrique (16);
une structure ronde (21) étant associée à l'extrémité inférieure de ledit boîtier en acier cylindrique (16) et fixée, lorsqu'il est utilisée, à ladite tige (4) et insérée dans le raccord/soupape (2) afin d'éviter le déplacement du bouchon (1) lorsque celui-ci est inséré dans la canalisation (18) pendant les opérations; ladite machine d'obturation étant **caractérisé en ce que**
dans les surfaces supérieure et inférieure de ladite structure ronde (21) sont prévus des trous pour que le fluide provenant de la canalisation (18) pénètre dans le boîtier (16), dans lequel la surface latérale du boîtier (16) est pourvue de raccords ou des brides (23) pour le by-pass et la valve de ventilation.

2. Machine selon la revendication 1, dans lequel ladite structure ronde (21) est en acier et sa surface latérale, en contact avec la paroi interne latérale du raccord/soupape (2), est revêtue d'un matériau à faible coefficient de friction.

3. Machine selon la revendication 1 ou 2, dans lequel ladite structure ronde (21) a une forme autre que circulaire ou complètement circulaire, et peut avoir plutôt la forme de secteurs ou de lobes opposés.

4. Machine selon l'une quelconque des revendications 1 à 3, dans lequel sur la surface conique du disque mobile (6), il est prévu une série de plaques d'acier mobiles (10) qui, pendant que le bouchon (1) est actionné, suivent l'expansion de le joint d'étanchéité (8) auquel ils sont rattachés, coulissant radialement le long des guides ménagés sur le disque conique (6) correspondant et agissant de manière à éviter que le joint (8) soit extrait de sa place du fait de la pression du fluide.

5. Machine selon la revendication 4, dans lequel lesdites plaques (10) comportent chacun une dent (9) sur le côté faisant face audit joint d'étanchéité (8), et ledit joint d'étanchéité (8) comporte une cavité circulaire concentrique (19) réalisée sur le côté tourné lesdites plaques (10), lesdites dents (9) étant introduit dans ledit cavité circulaire concentrique de manière à relier les plaques (10) audit joint d'étanchéité (8).

6. Machine selon la revendication 5, dans lequel lesdites dents (9) desdites plaques (10) sont pliées vers l'extrémité des plaques respectives tournées vers le centre du disque mobile (6) lorsque le joint d'étanchéité (8) est monté, et le cavité circulaire (19) dudit joint d'étanchéité (8) a une forme complémentaire à la forme des dents (9).

7. Machine selon l'une quelconque des revendications 1 à 6, dans lequel ledit bouchon (1) est relié audit cadre au moyen d'une charnière (17), et ladite tige creuse (4) est reliée au bouchon (1) et traverse ledit boîtier cylindrique en acier (16), de sorte que, lorsque ladite tige (4) est déplacée vers le haut et vers le bas ledit bouchon (1) tourne autour de la charnière (17) et est inséré dans ou retiré de ladite canalisation (18) sur lequel l'intervention est réalisé, respectivement.

8. Machine selon l'une quelconque des revendications 1 à 7, dans lequel un vérin hydraulique (3) est prévu au-dessus dudit cadre (4) et agit sur ladite tige (4), pour l'insertion ou le retrait dudit bouchon (1) dans et de ladite canalisation (18).

9. Machine selon l'une quelconque des revendications 1 à 8, ledit bouchon comporte un second vérin hydraulique (5) pour déplacer le disque conique en acier mobile (6) plus près du disque stationnaire (7), rendant ainsi le joint d'étanchéité en caoutchouc (8) entre elles se dilater radialement pour engager la paroi du tube interne (28).

10. Machine selon l'une quelconque des revendications 1 à 9, comprenant des soupapes de sécurité (13) également réalisés dans le corps (25) du bouchon (1), ce qui évite toute ouverture intempestive ou de fermeture du bouchon en cas de défaillance.

11. Machine selon l'une quelconque des revendications 1 à 10, dans lequel l'azote est injecté à l'intérieur de la zone d'intervention de la canalisation (18) afin d'éviter la formation de mélanges inflammables ou explosifs avec l'air et les fluides transportés.

12. Machine selon la revendication 11, dans lequel ledit bouchon (1) comporte un système de canaux internes (11) au moyen duquel l'azote peut être acheminé dans le canalisation (18), devant le bouchon (1) vers la zone d'intervention.
